# EUROPEAN PATENT SPECIFICATION

(11) **EP 2 765 068 B1**
(45) Date of publication and mention of the grant of the patent: **07.06.2017**
(21) Application number: 13154444.7
(22) Date of filing: 07.02.2013
(51) Int. Cl.: B62J 11/00, B62K 19/40

(54) **Unit bracket for supporting a unit and straddle-type vehicle provided with such unit bracket**
Einheitenhalter zum Halten einer Einheit und Grätschsitzfahrzeug mit solch einem Einheitenhalter
Support d'unité destiné à supporter une unité et véhicule de type à califourchon équipé d'un tel support

(43) Date of publication of application: 13.08.2014
(73) Proprietor: YAMAHA MOTOR CO., LTD., Iwata-shi Shizuoka 438-8501 (JP)
(72) Inventor: Hermann, Molteni, Iwata, Shizuoka 438-8501 (JP)
(74) Representative: Grünecker Patent- und Rechtsanwälte PartG mbB

(56) References cited:
- FR-A1- 2 332 901
- FR-A1- 2 511 967

## Description

The present invention relates to a straddle-type vehicle comprising a unit bracket supporting a unit being arranged in front of a head pipe of a straddle-type vehicle.

Prior art document FR-A-2511967 A discloses to a straddle-type vehicle, wherein the front part of said vehicle is provided with a leg shield that is arranged above the front wheel. A box used as a luggage compartment is provided within said leg shield and a lid is arranged on the front side, so that the respective compartment can be opened and closed. The luggage compartment is arranged between the headlight and the front wheel. The rear section of the luggage compartment is attached to the head pipe of the straddle-type vehicle. The headlight unit is attached to the upper section of the leg shield means.

Prior art document FR-A-2332901 A relates to a motorcycle and the specific teaching refers to an attachment structure for attaching components at the front of the head pipe. Said structure comprises arms, which are adapted to support the headlight as well as the further fixing means, being adapted to attach a front cover.

In a straddle-type vehicle, several units have to be arranged and supported on a body frame of the vehicle. As for example, units comprising an ABS and/or a battery unit have to be taken into consideration. Such units have to be placed within the vehicle in consideration of functional connection with other units and elements of the vehicle as well as in consideration of maintenance and protection of the unit, and size of the vehicle.

Accordingly, it has already been suggested to provide a battery bracket for supporting a battery being arranged in front of a head pipe of a straddle-type vehicle. Such battery bracket can be fixed to said head pipe. The battery bracket made of steel ensures sufficient strength in view of weight of the battery and the respective arrangement ensures that the battery can easily be reached for service and maintenance. In particular, only a head cover has to be removed to disconnect the battery from the electric system or to remove the battery.

The area in front of the head pipe can be considered as a suitable place for arrangement of a unit such as a battery. However, said area is relatively high with regard to the road surface and in a forward part of the vehicle so that the weight of the respective arrangement of the unit has to be taken into consideration in order to ensure suitable drivability of the vehicle. Moreover, there is also the general intention to provide the straddle-type vehicle with a compact structure at low costs.

Accordingly, it is the object of the present invention to provide a straddle-type vehicle comprising a unit bracket for supporting a unit which provides arrangement of the unit with a compact structure, low weight and low cost.

According to the present invention, said object is solved by a straddle-type vehicle having the features of independent claim 1. Preferred embodiments are laid down in the dependent claims.

Accordingly, it is provided a unit bracket supporting a unit being arranged in front of a head pipe of a straddle type vehicle, wherein said unit bracket comprises an accommodation section for accommodating said unit, a support
section adapted for fixing a cover section of the vehicle and a connection section for connecting said accommodation section and said support section.

According to a preferred embodiment said accommodation section, said support section and said connection section are integrally formed with each other, in particular as a one-piece element.

Further preferably, said unit bracket is made of resin by injection moulding.

In particular, it is provided a straddle-type vehicle comprising a body frame and such a unit bracket, wherein said unit bracket is arranged in front of said head pipe of the body frame and a rear section of said accommodation section is supported at the head pipe, an upper part of said rear section is connected with a lower part of said connection section and said connection section extends from its lower part in forward and/or upward direction of the vehicle to its upper part which is connected with a lower part of said support section.

According to a preferred embodiment said support section of the unit bracket extends from its lower part in rearward and/or upward direction of the vehicle.

Further preferably, said accommodation section of the unit bracket is open to the forward direction of the vehicle.

Further preferably, with the unit accommodated in said accommodation section of the unit bracket, a free space is provided between said unit and the lower part of the support section, wherein said connection section is arranged on a rear side of said free space.

According to the present invention said cover section is a windshield of the vehicle.

Further, a cover body covers the unit bracket in a forward direction of the vehicle.

Further, a lid is provided to open the cover body for removing the unit supported on said unit bracket.

According to the present invention said unit bracket is arranged above a headlight of the vehicle.

Further preferably, said headlight is supported at a bottom part of the unit bracket.

Further preferably, said cover body comprises a left and a right side cover covering the unit bracket in left and right side view of the vehicle.

According to a preferred embodiment said cover body is fixed at said unit bracket.

According to a preferred embodiment said unit further comprises an ABS unit.

Hereinafter, the present invention is illustrated and explained by means of preferred embodiments in conjunction with the accompanying drawings. In the drawings wherein:
- Fig. 1a: is a side view of the straddle-type vehicle according to an embodiment,
- Fig. 1b: is a side view of the straddle-type vehicle according to the embodiment, wherein cover means and seat have been removed so that the body frame and main components are visible,
- Fig. 2a: is a side sectional view of the head pipe area of the straddle-type vehicle according to the embodiment,
- Fig. 2b: is a side view of the elements that are attached to the head pipe,
- Fig. 2c: is the side view similar to Figs. 2a and 2c, wherein side cover and windshield is attached,
- Fig. 3: is a top view of the unit bracket according to the embodiment,
- Fig. 4: is a prospective top view of the unit bracket according to the embodiment,
- Fig. 5: is a side view illustrating the opposing side of Fig. 2b,
- Fig. 6a: is a front view of the straddle-type vehicle, wherein the unit bracket is exposed, and
- Fig. 6b: is the front view with the unit bracket covered by the lid.

For the straddle-type vehicle according to the embodiment, terms like "upper", "lower", "upward direction", "downward direction", "forward direction", "rearward direction", "left", "right", "front", "rear", "horizontally" and "vertically" are commonly defined with regard to the normal driving direction of the vehicle.

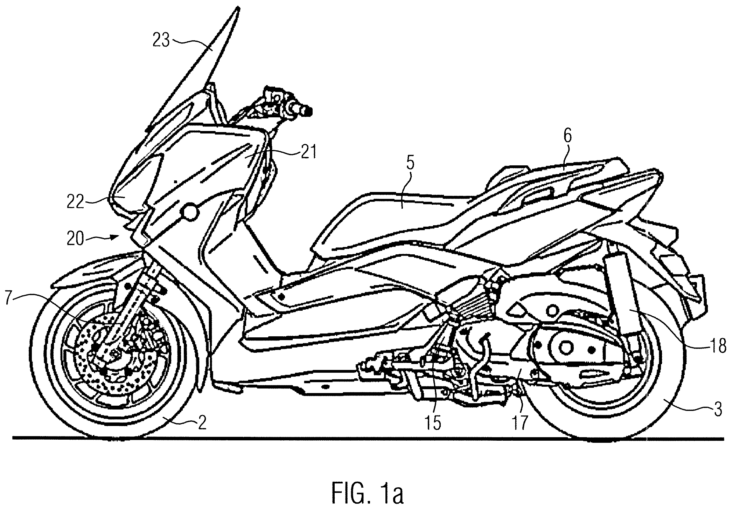

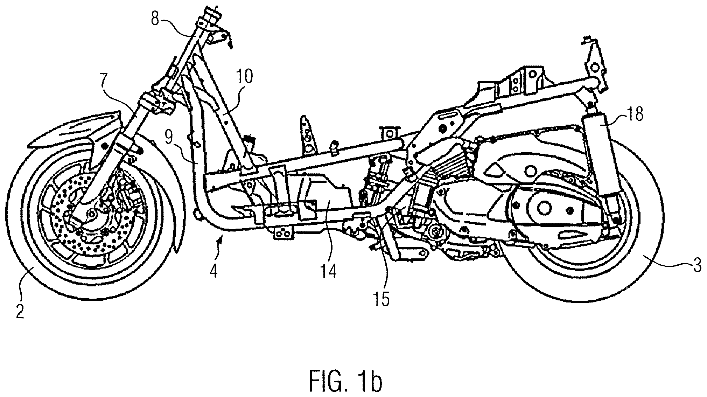

The straddle-type vehicle, as illustrated within Figure 1a, is embodied as a scooter-type vehicle having a front wheel 2, a rear wheel 3 and a main seat 5 for a driver. On a rear section of the main seat 5 an assist seat 6 for a co-rider is arranged directly above the rear wheel 3. The rear wheel 3 is supported on a body frame with a suspension means 18 and a swinging-type drive unit 17 being rotatable or swingable around a pivot support bearing of the body frame. Said swinging-type drive unit 17 comprises an engine 15 and a transmission. The swinging-type drive unit 17 drives the rear wheel 3 in order to drive the vehicle. According to the specific arrangement illustrated within Figure 1b, the body frame 4 supports the fuel tank 14 and the engine 15.

A cover means 20 is constituted by several cover bodies which are attached to each other and are supported on the body frame 4. The preferred embodiment is equipped with an engine of the water-cooled type so that the radiator is provided for cooling the engine. In particular, that radiator is arranged in front of the fuel tank and exposed in the forward direction to the wind when the vehicle drives in said forward direction.

The front wheel 2 is supported by a front fork 7 wherein said front fork 7 is rotatably supported within the head pipe 8 of the body frame. A handle is attached to said front fork 7 in order to rotate same within the head pipe 8. According to the preferred embodiment, the head pipe 8 and the upper part of the front fork 7 are covered in side view by a cover body 21. A head light section 22 is facing to the front side of the vehicle. A windshield 23 is provided for protecting the driver. An instrument panel is arranged behind the windshield 23 and faces to the driver. Accordingly, the windshield 23 constitutes some kind of cover section of the cover means 20 of the straddle-type vehicle.

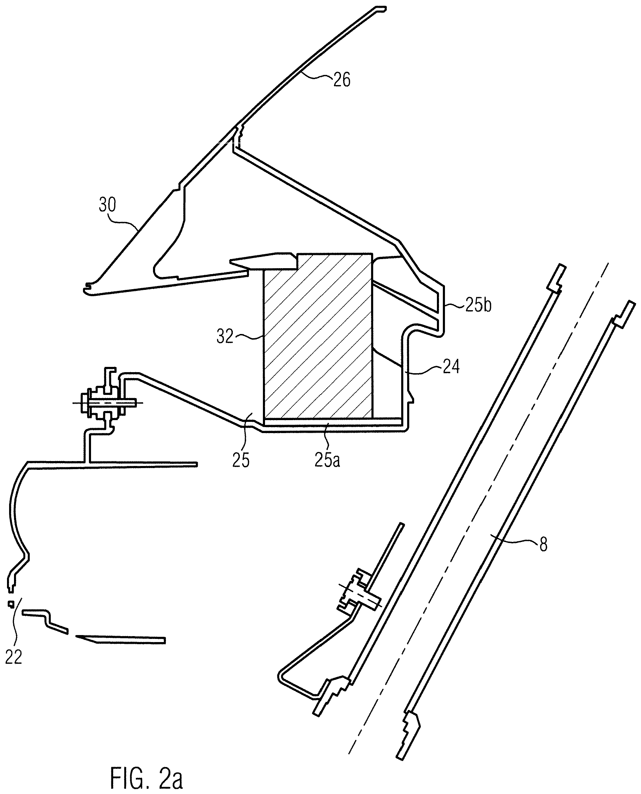

According to the preferred embodiment, a unit bracket 24 is arranged in front of the head pipe 8 of the body frame 4 as illustrated in Figure 2a. Said unit bracket 24 is detachably fixed at said head pipe 8. Said unit bracket 24 is arranged above the front wheel 2 and below the windshield 23. A front lens of the headlight is arranged in front of said unit bracket 24. According to the preferred embodiment, the headlight unit 22 is arranged on a bottom section of the unit bracket 24. Between the headlight lens and the windshield 23, a lid 30 is provided which can be opened to reach the unit bracket 24 from a front side of the vehicle.

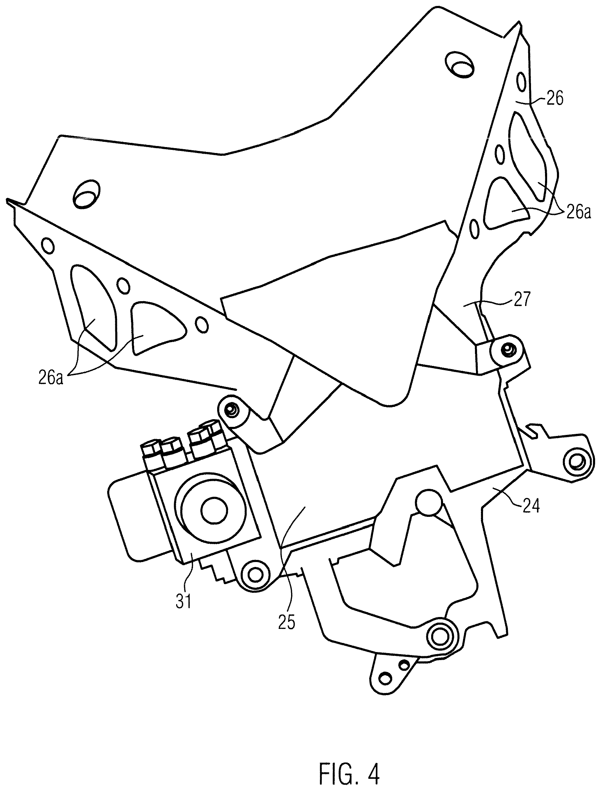

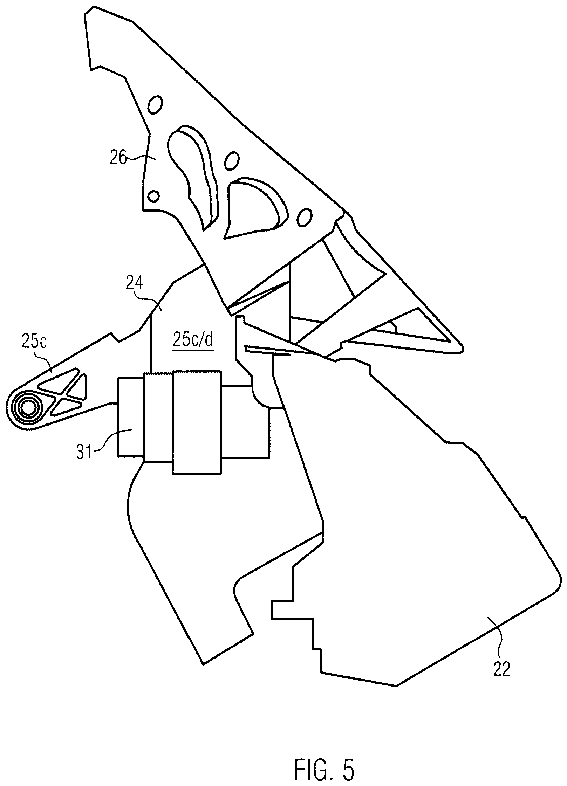

According to the preferred embodiment, the unit bracket 24 serves as a battery bracket so that the battery 32 for the vehicle is supported at an accommodation section 25 (see Figure 2a) of the unit bracket 24. In addition thereto, an ABS unit 31 is also supported on said unit bracket 24 as illustrated in Figures 4 and 5.

As can be taken from Figs. 4 and 5, the ABS unit 31 is attached to the unit bracket 24 and, according to the preferred embodiment, said ABS unit 31 is arranged on one side of the accommodation section 25. In particular, said ABS unit 31 is directly attached to the right side section 25c of the accommodation section 25. Such arrangement can assure a high strength configuration and the ABS unit 31 is arranged in the vicinity of the battery as well as the instrument panel and respective control units so that functional connection of the respective elements can be realized by short wiring.

As illustrated with Figures 2a, 4 and 6a, the unit bracket 24, according to the preferred embodiment, comprises the accommodation section 25 accommodating a battery 32. Said accommodating section 25 comprises a bottom plate 25a or frame part which extends substantially horizontally with regard to the vehicle so that the unit can be easily placed thereon. A rear section 25b of said accommodation section 25 extends substantially vertically from a rear edge of said bottom plate 25a or frame part. Said rear section 25b of the accommodation section 25 is adapted to be attached and fixed to the head pipe 8 of the vehicle body 4. The bottom plate 25a and the rear section 25b are further connected with each other by means of left and right side sections 25c/d. Accordingly, the accommodation section 25 is constituted by sections on four sides in order to ensure high strength wherein the accommodation section 25 is open in forward and upward direction of the vehicle.

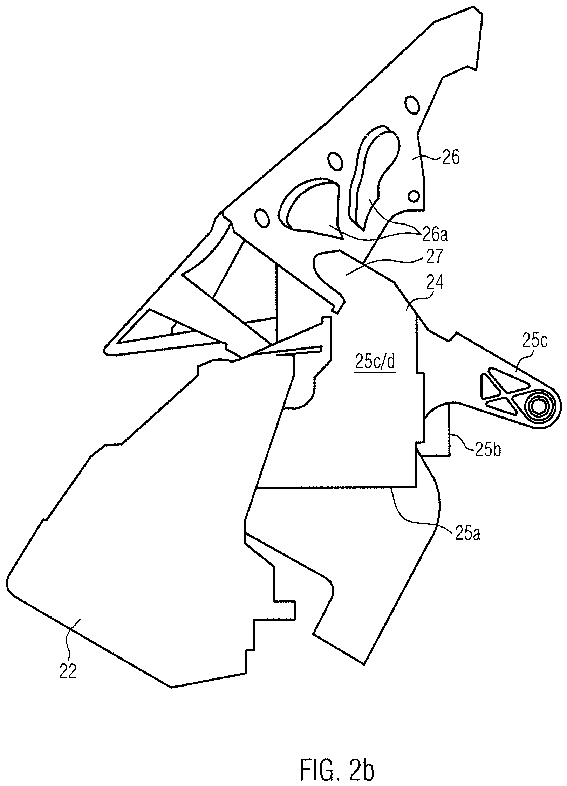

As illustrated in Figs. 2b and 5, the rear section 25b is provided with a rearward extension 25c that extends to the rear of the vehicle and is inclined in downward direction. Said rear extension 25c is provided to be attached to the head pipe 8 of the vehicle so that the unit bracket 24 is attached to and supported at the vehicle frame 4. As illustrated within Figs 2a, 2b and 5, the headlight unit 22 is attached to the unit bracket 24 so that said headlight unit 22 is attached to the vehicle frame 4 by means of the unit bracket 24. Accordingly, the headlight unit 22 and the unit bracket can constitute a system unit which can be preassembled and then attached to the vehicle frame 4. Said system unit further contains the instrument panel. Accordingly, preassembling of the system unit does not only comprise connection of the respective elements but also comprises wire connections of the respective elements.

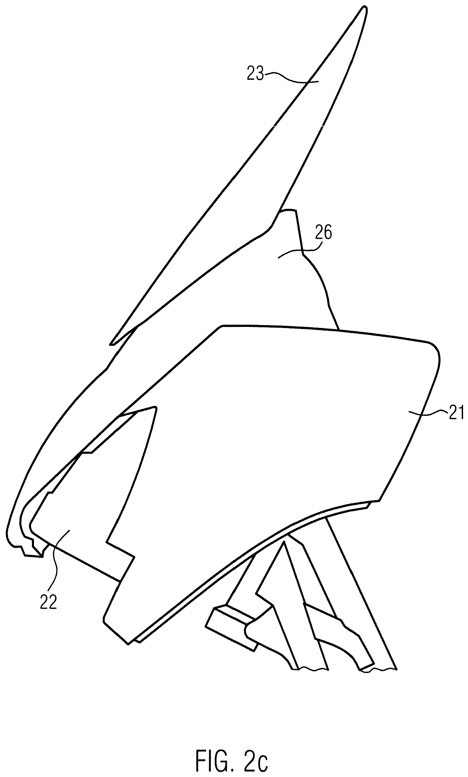

According to the preferred embodiment, the unit bracket 24 further comprises a support section 26 being adapted to affix a cover section of the vehicle. In particular, a windshield 23 is fixed on said support section 26 as illustrated in the side view of Figure 2c. Said support section 26 is constituted by left and right fixing parts having a V-shaped configuration as illustrated by the top view of Figure 4. The support section 26 extends from a lower part thereof in the rearward and upward direction as can be identified in Figure 5. As can be taken from the combination of Figures 2b and 4, the connection section 27 is smaller in size than the support section 26. In particular, the V-shaped support section 26 completely covers the connection section 27 in consideration of the top view of Figure 4. Moreover, as can also be taken from the combination of Figure 2a, the front edge of the accommodation section 25 is placed more forward at the vehicle than the respective front edge of the support section 26.

The accommodation section 25 and the support section 26 of the unit bracket 24 are connected to each other by means of the connection section 27 as can be taken by Figures 2a and 2b. Said connection section 27 extends from an upper part of the rear section of the accommodation section 25 in the upward and forward direction to the lower part of the support section 26. Accordingly, said connection section 27 is arranged to be inclined with regard to the forward direction. As can be taken from Figure 2a, said connection section 27 is larger in the horizontal direction than the bottom plate 25a of the accommodation section 25 so that free space is ensured that can be easily reached from the front direction. Said connection section 27 is inclined in the upward direction so that a rear upper edge of the unit accommodated within the accommodation section 25 can be easily moved in the forward and upward direction to remove the respective unit. As can be taken from Figs. 2b and 5, the connection section 27 and the rear extension 25c are substantially extending along a common plane that is inclined with regard to a horizontal direction of the vehicle.

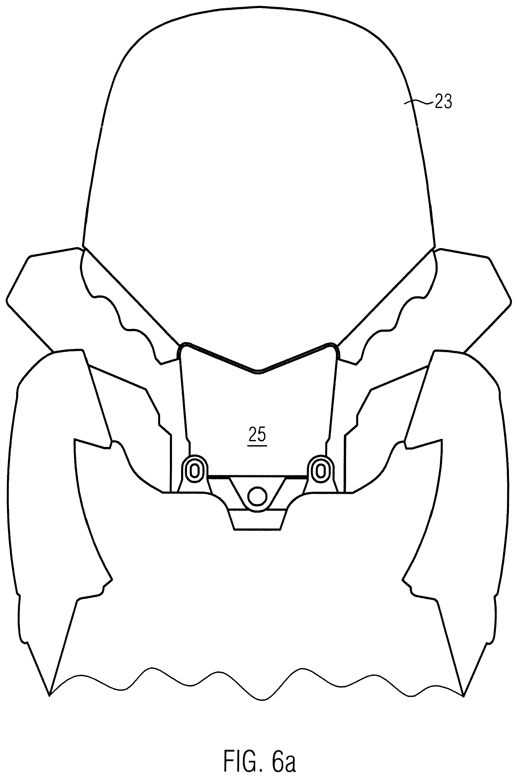

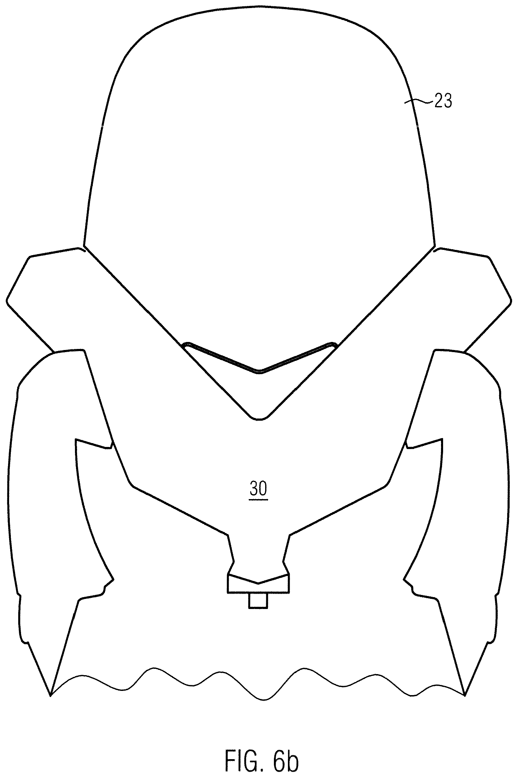

Fig. 6a illustrates the front view of the vehicle, wherein the accommodation section 25 is open by removing the lid 30, said accommodation section 25 can be easily reached so that the battery can be connected and disconnected or removed. The lid 30 being attached is illustrated by Fig. 6b. As indicated by means of Figs. 6a and 6b, the windshield is attached above said lid 30 and the headlight unit 22 (which is not illustrated in Figs. 6a and 6b) is attached and the bottom section of the unit bracket 24 and does not interfere with the opening operation of the lid 30. Consequently, any maintenance action like recharging or removing can be carried out by simply removing the lid 30 without need of removing any further elements of the vehicle.

As indicated in Figure 2b, and also illustrated in the further figures, side openings 26a are provided on the left and right side of the support section 26. Said side openings 26a are provided for turn light units being arranged on the vehicle.

According to the preferred embodiment, the windshield 23, having a transparent configuration, is suggested as a cover section being attached to the support section 26.

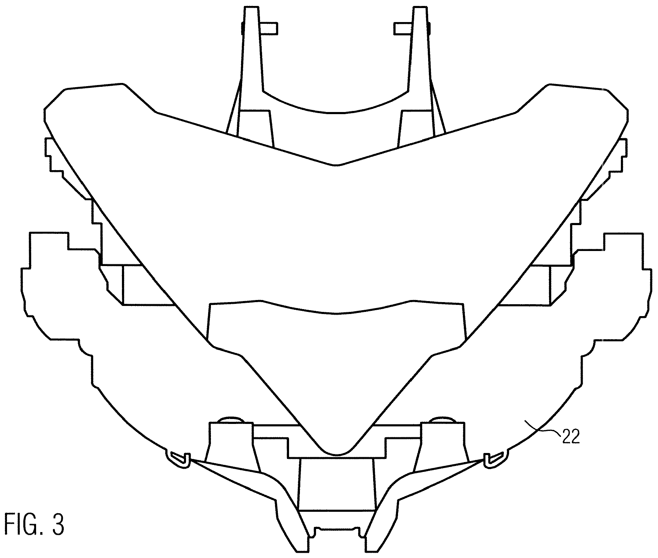

According to the illustration of Figures 3 and 6a,6b, it is evident that the unit bracket 24 is substantially symmetrical with regard to the vertical middle plane of the vehicle. Accordingly, the respective cover section, especially the windshield 23, would be attached symmetrically to said plan. Moreover, the unit being supported by the accommodation section is also placed symmetrically with regard to said plan so that weight balance is provided.

According to the preferred embodiment, the unit bracket 24, constituted by the accommodation section 25, the support section 26 and the connection section 27, is formed as a one-piece element by injection moulding. Hence, the respective sections are integrally formed with each other so that a unit supporting means and a windshield stay is provided by one element in order to reduce the number of elements of the vehicle which ensures compact structure at low weight.

According to the preferred embodiment, the unit bracket is made by synthetic resin that provides a low-weight element to promote weight reduction of the vehicle.

The illustrated embodiment discloses a unit bracket for supporting a unit being arranged in front of a head pipe 8 of a straddle type vehicle. Said unit bracket 24 comprises an accommodation section 25 for accommodating said unit, a support section 26 adapted for fixing a cover section of the vehicle and a connection section 27 for connecting said accommodation section 25 and said support section 26.

Said accommodation section 25, said support section 26 and said connection section 27 are integrally formed with each other, in particular as a one-piece element. Said unit bracket 24 is made of resin by injection moulding.

The illustrated embodiment further discloses a straddle type vehicle comprising a body frame 4 and a unit bracket 24, wherein said unit bracket 24 is arranged in front of said head pipe 8 of the body frame 4 and a rear section of said accommodation section 25 is supported at the head pipe 8. An upper part of said rear section is connected with a lower part of said connection section 27 and said connection section 27 extends from its lower part in forward and/or upward direction of the vehicle to its upper part which is connected with a lower part of said support section 26. In particular, said connection section 27 extends at an angle of 45° with regard to the horizontal direction of the vehicle with a deviation range of ± 10°.

Said support section 26 of the unit bracket 24 extends from its lower part in rearward and/or upward direction of the vehicle. In particular, said support section 26 extends at an angle of 45° with regard to the horizontal direction of the vehicle with a deviation range of ± 10°.

Said accommodation section 25 of the unit bracket 24 is open to the forward direction of the vehicle.

With the unit accommodated in said accommodation section 25 of the unit bracket 24, a free space is provided between said unit and the lower part of the support section 26. Said connection section 27 is arranged on a rear side of said free space.

Said cover section is a windshield 23 of the vehicle.

A cover body 21 covers the unit bracket 24 in a forward direction of the vehicle. A lid is provided to open the cover body 21 for removing the unit supported on said unit bracket 24.

Said unit bracket 24 is arranged above a headlight of the vehicle. Said headlight is supported at a bottom part of the unit bracket 24.

Said cover body 21 comprises a left and a right side cover covering the unit bracket 24 in left and right side view of the vehicle. Said cover body 21 is fixed at said unit bracket 24.

Said unit comprises a battery 32 and optionally an ABS unit 31.

## Claims

1. Straddle type vehicle comprising a body frame (4), a headlight, a windshield (23) and a unit bracket (24) supporting a unit that comprises a battery (32), wherein said unit bracket (24) is arranged in front of a head pipe (8) of the body frame (4) and above the headlight, said unit bracket (24) comprises an accommodation section (25) for accommodating said unit, a support section (26) fixing the windshield (23) of the vehicle and a connection section (27) for connecting said accommodation section (25) and said support section (26), a rear section of said accommodation section (25) is supported at the head pipe (8), an upper part of said rear section is connected with a lower part of said connection section (27) and said connection section (27) extends from its lower part in forward and/or upward direction of the vehicle to its upper part which is connected with a lower part of said support section (26), a cover body (21) covers the unit bracket (24) in a forward direction of the vehicle and a lid (30) is provided to open the cover body (21) for removing the unit supported on said unit bracket (24), the windshield (23) of the vehicle is attached above said lid (30).

2. Straddle-type vehicle according to claim 1, wherein said accommodation section (25), said support section (26) and said connection section (27) are integrally formed with each other, in particular as a one-piece element.

3. Straddle-type vehicle according to claim 1 or 2, wherein said unit bracket (24) is made of resin by injection moulding.

4. Straddle-type vehicle according to at least one of the claims 1 to 3, wherein said support section (26) of the unit bracket (24) extends from its lower part in rearward and/or upward direction of the vehicle.

5. Straddle-type vehicle according to at least one of the claims 1 to 4, wherein said accommodation section (25) of the unit bracket (24) is open to the forward direction of the vehicle.

6. Straddle-type vehicle according to at least one of the claims 1 to 4, with the unit accommodated in said accommodation section (25) of the unit bracket (24), a free space is provided between said unit and the lower part of the support section (26), wherein said connection section (27) is arranged on a rear side of said free space.

7. Straddle-type vehicle according to at least one of the claims 1 to 6, wherein said headlight is supported at a bottom part of the unit bracket (24).

8. Straddle-type vehicle according to at least one of the claims 1 to 7, wherein said cover body (21) comprises a left and a right side cover covering the unit bracket (24) in left and right side view of the vehicle.

9. Straddle-type vehicle according to at least one of the claims 1 to 8, wherein said cover body (21) is fixed at said unit bracket (24).

10. Straddle-type vehicle according to at least one of the claims 1 to 9, wherein said unit further comprises an ABS unit (31).

## Patentansprüche

1. Grätschsitz-Typ-Fahrzeug, das einen Körper-Rahmen (4), einen Haupt-Scheinwerfer, ein Wind-Schild (23) und eine Einheit-Klammer (24) umfasst, welche eine Einheit lagert, die eine Batterie (32) umfasst, wobei diese Einheit-Klammer (24) vor einem Kopf-Rohr (8) des Körper-Rahmens (4) und oberhalb des Haupt-Scheinwerfers angeordnet ist, diese Einheit-Klammer (24) umfasst einen Aufnahmeabschnitt (25) zur Aufnahme dieser Einheit, einen Lageabschnitt (26), der das Wind-Schild (23) des Fahrzeugs fixiert und einen Verbindungsabschnitt (27), zum Verbinden dieses Aufnahmeabschnitts (25) und dieses Lagerabschnitts (26), ein hinterer Abschnitt von diesem Aufnahmeabschnitt (25) ist an dem Kopf-Rohr (8) gelagert, ein oberer Teil von diesem hinteren Abschnitt ist mit einem unteren Teil von diesem Verbindungsabschnitt (27) verbunden und dieser Verbindungsabschnitt (27) erstreckt sich von dessen unterem Teil in eine Vorwärts- und/oder Aufwärts-Richtung des Fahrzeugs zu dessen oberem Teil, der mit einem unteren Teil von diesem Lagerabschnitt (26) verbunden ist, ein Abdeckungskörper (21) deckt die Einheit-Klammer (24) in einer Vorwärts-Richtung des Fahrzeugs ab und ein Deckel (30) ist vorgesehen, um den Abdeckungskörper (21) zu öffnen, um die Einheit, gelagert auf diese Einheit-Klammer (24), zu entfernen, das Wind-Schild (23) des Fahrzeugs ist oberhalb dieses Deckels (30) angebracht.

2. Grätschsitz-Typ-Fahrzeug gemäß Anspruch 1, wobei dieser Aufnahmeabschnitt (25), dieser Lageabschnitt (26) und dieser Verbindungsabschnitt (27) integral miteinander ausgebildet sind, insbesondere als ein einstückiges Element.

3. Grätschsitz-Typ-Fahrzeug gemäß Anspruch 1 oder 2, wobei diese Einheit-Klammer (24) aus Harz durch Spritzgießen gemacht ist.

4. Grätschsitz-Typ-Fahrzeug gemäß zumindest einem der Ansprüche 1 bis 3, wobei dieser Lagerabschnitt (26) der Einheit-Klammer (24) sich von dessen unterem Teil in eine Rückwärts und/oder Aufwärts-Richtung des Fahrzeugs erstreckt.

5. Grätschsitz-Typ-Fahrzeug gemäß zumindest einem der Ansprüche 1 bis 4, wobei dieser Aufnahmeabschnitt (25) der Einheit-Klammer (24) zu der Vorwärts-Richtung des Fahrzeugs geöffnet ist.

6. Grätschsitz-Typ-Fahrzeug gemäß zumindest einem der Ansprüche 1 bis 5, mit der Einheit, aufgenommen in diesem Aufnahmeabschnitt (25) der Einheit-Klammer (24), ein Freiraum ist zwischen dieser Einheit und dem unteren Teil des Lagerabschnitts (26) vorgesehen, wobei der Verbindungsabschnitt (27) an einer hinteren Seite von diesem Freiraum angeordnet ist.

7. Grätschsitz-Typ-Fahrzeug gemäß zumindest einem der Ansprüche 1 bis 6, wobei dieser Haupt-Scheinwerfer an einem Bodenteil der Einheit-Klammer (24) gelagert ist.

8. Grätschsitz-Typ-Fahrzeug gemäß irgendeinem der Ansprüche 1 bis 7, wobei dieser Abdeckungskörper (21) eine linke und eine rechte Seitenabdeckung umfasst, welche die Einheit-Klammer (24) in Links- und Rechts-Seiten-Ansicht des Fahrzeugs abdeckt.

9. Grätschsitz-Typ-Fahrzeug gemäß zumindest einem der Ansprüche 1 bis 8, wobei dieser Abdeckungskörper (21) an dieser Einheit-Klammer (24) fixiert ist.

10. Grätschsitz-Typ-Fahrzeug gemäß zumindest einem der Ansprüche 1 bis 9, wobei diese Einheit weiterhin eine ABS-Einheit (31) umfasst.

## Revendications

1. Véhicule de type à selle comprenant un cadre (4), un bloc optique, un pare-vent (23) et un support d'unité (24) supportant une unité qui comprend une batterie (30), ledit support d'unité (24) étant disposé en avant du tube de fourche (8) du cadre (4) et au-dessus du bloc optique, ledit support d'unité (24) comprenant une section d'accueil (25) destinée à accueillir ladite unité, une section de support (26) fixant le pare-vent (23) du véhicule et une section de raccordement (27) destinée à raccorder ladite section d'accueil (25) et ladite section de support (26), la section arrière de ladite section d'accueil (25) est supportée au niveau du tube de fourche (8), la partie supérieure de ladite section arrière est reliée à la partie inférieure de ladite section de raccordement (27) et ladite section de raccordement (27) s'étend depuis sa partie inférieure dans le sens vers l'avant et/ou vers le haut du véhicule jusqu'à sa partie supérieure qui est raccordée à la partie inférieure de ladite section de support (26), un corps de capot (21) recouvre le support d'unité (24) dans le sens vers l'avant du véhicule et un couvercle (30) est prévu pour ouvrir le corps de capot (21) afin de retirer l'unité supportée sur ledit support d'unité (24), le pare-vent (23) du véhicule étant fixé au-dessus dudit couvercle (30).

2. Véhicule de type à selle selon la revendication 1, dans lequel ladite section d'accueil (25), ladite section de support (26) et ladite section de raccordement (27) sont formées en une seule pièce l'une avec l'autre, en particulier en tant qu'élément monobloc.

3. Véhicule de type à selle selon la revendication 1 ou la revendication 2, dans lequel ledit support d'unité (24) est constitué de résine obtenue par moulage par injection.

4. Véhicule de type à selle selon au moins l'une des revendications 1 à 3, dans lequel ladite section de support (26) du support d'unité (24) s'étend depuis la partie inférieure et vers l'arrière et/ou vers le haut du véhicule.

5. Véhicule de type à selle selon au moins l'une des revendications 1 à 4, dans lequel ladite section d'accueil (25) du support d'unité (24) est ouverte vers l'avant du véhicule.

6. Véhicule de type à selle selon au moins l'une des revendications 1 à 4, comportant l'unité logée dans ladite section d'accueil (25) du support d'unité (24), un espace libre étant prévu entre ladite unité et la partie inférieure de la section de support (26), ladite section de raccordement (27) étant agencée sur le côté arrière dudit espace libre.

7. Véhicule de type à selle selon au moins l'une des revendications 1 à 6, dans lequel ledit bloc optique est supporté au niveau de la partie formant le fond du support d'unité (24).

8. Véhicule de type à selle selon au moins l'une des revendications 1 à 7, dans lequel ledit corps de capot (21) comprend un capot du côté gauche et un capot du côté droit recouvrant le support d'unité (24) dans des vues latérales de gauche et de droite du véhicule.

9. Véhicule de type à selle selon au moins l'une des revendications 1 à 8, dans lequel ledit corps de capot (21) est fixé au niveau dudit support d'unité (24).

10. Véhicule de type à selle selon au moins l'une des revendications 1 à 9, dans lequel ladite unité comprend en outre une unité ABS (31).
